# EUROPÄISCHE PATENTSCHRIFT

(11) **EP 0 381 970 B1**
(45) Veröffentlichungstag und Bekanntmachung des Hinweises auf die Patenterteilung: **20.04.1994**
(21) Anmeldenummer: 90101067.8
(22) Anmeldetag: 19.01.1990
(51) Int. Cl.: A01D 78/10

(54) **Kreiselheumaschinen**
Hay-making machine
Machine de fenaison

(30) Priorität: 09.02.1989 DE 3903764
(43) Veröffentlichungstag der Anmeldung: 16.08.1990
(73) Patentinhaber: CLAAS SAULGAU GMBH, D-88340 Saulgau (DE)
(72) Erfinder: Reber, Erwin, D-7968 Saulgau (DE); Geng, Manfred, D-7968 Saulgau-Bogenweiler (DE); Deni, Franz, D-7968 Saulgau-Bogenweiler (DE)

(56) Entgegenhaltungen:
- EP-A- 0 289 864
- CH-A- 654 977
- DE-U-7 835 320

## Beschreibung

Die Erfindung bezieht sich auf Kreiselheumaschinen nach dem Gattungsbegriff des Anspruches 1.

Aus der Deutschen Gebrauchsmusterschrift 78 35 320 ist eine Maschine dieser Art mit zwei in Arbeitsstellung nebeneinander angeordneten Arbeitskreiseln bekannt. Zum Transport wird der äußere Kreisel am teleskopisch gestalteten Ausleger in Richtung des inneren Kreisels verschoben und entweder um eine vertikale Achse nach hinten geschwenkt, so daß er - in Fahrtrichtung gesehen - hinter dem inneren Kreisel liegt, oder um eine in Fahrtrichtung liegende Achse so nach oben geklappt, daß er um 180 ° geschwenkt mit den Zinken nach oben zeigend über dem inneren Kreisel liegt. Im ersten Falle ergibt sich ein für die Straßenfahrt ungünstig langer Maschinenzug und es tritt bei Dreipunktanbau wegen des weit hinten liegenden Gesamtschwerpunktes der Maschine ein erhebliches Moment um die Schlepperquerachse auf, was zusätzlich ungünstige Auswirkungen auf die Lenkung des Schleppers bringt. Im zweiten Fall ist wegen der Schwenkung des äußeren Kreisels um 180 ° die Anordnung und Gestaltung der Verstellmittel sehr aufwendig und kompliziert oder es ist bei Verschiebung und Verschwenkung des äußeren Kreisels von Hand die Transportstellung nur mit sehr großem Kraftaufwand von der bedienenden Person zu erreichen.

Bei einer anderen Maschine nach der Deutschen Gebrauchsmusterschrift 73 18 934 ruhen die Arbeitskreisel während der Arbeit auf eigenen Fahrgestellen. Zum Transport werden die Kreisel um 90 ° nach oben geklappt und die Maschine wird dann nur noch von dem Dreipunkt-Gestänge eines Schleppers getragen. Beim Befahren unebenen Geländes oder von Kurven tritt wegen des hohen Gesamtschwerpunktes der Maschine ein erhebliches Moment um die Längsachse von Schlepper und Maschine auf.

Mit der Erfindung soll gegenüber Ausführungen nach der Deutschen Gebrauchsmusterschrift 78 35 320 bei einfacher Anordnung und Gestaltung von Verstellmitteln das Verbringen der Maschine in die Transportstellung für die bedienende Person wesentlich erleichtert und gegenüber Ausführungen nach der Deutschen Gebrauchsmusterschrift 73 18 934 die Größe des durch den hohen Gesamtschwerpunkt der in Transportstellung befindlichen Maschine möglichen Momentes verringert und die größte Höhe der Maschine beim Transport vermindert werden. Dies wird erfindungsgemäß dadurch erreicht, daß bei Verschwenkung um etwa 90 ° nach oben der Außenteil der die Arbeitskreisel tragenden Ausleger mit einem einerseits am Maschinengestell gelagerten Verstellmittel gelenkig verbunden und über dieses beim Verschwenken in die Transportstellung zwangweise in eine verminderte Längserstreckung des Auslegers verschiebbar ist.

Die in Anspruch 2 beschriebene und beanspruchte Lösung ist besonders einfach. Statt ihr können aber auch andere Verstellmittel, z. B. hydraulische Hubzylinder Verwendung finden.

Es bietet sich an, wie in Anspruch 3 vorgeschlagen, die Verstellmittel auch zur Veränderung der Arbeitsbreite heranzuziehen, was hier fast ohne Mehraufwand möglich ist.

Anhand einer Abbildung wird die Erfindung am Beispiel einer Kreiselheumaschine mit zwei Arbeitskreiseln dargestellt. Sie kann selbstverständlich auch für Maschinen mit mehr Arbeitskreiseln oder auch nur mit einem Arbeitskreisel Anwendung finden.

Ein Maschinengestell (1) ist mit einem hier nicht dargestellten Dreipunktgestänge eines Schleppers verbunden. Selbstverständlich kann das Maschinengestell (1) auch auf einem eigenen Fahrgestell ruhen und von einem Schlepper gezogen sein. Am Maschinengestell (1) befinden sich in Fahrtrichtung liegende Schwenkachsen (2), auf denen Innenteile (3) von Auslegern (4) gelagert sind. Die Außenteile (5) der Ausleger (4) sind in den Innenteilen (3) längsverschiebbar, aber drehfest befestigt. An den Auslegern (4) sind Arbeitskreisel (6) antreibbar gelagert. Diese stützen sich auf Fahrgestelle (7) ab. Die Ausleger (4) können mittels hydraulischen Hubzylindern (8) hochgeschwenkt werden, bis sie eine etwa senkrechte Transportstellung einnehmen. Koppelstangen (9) sind einerseits mit den Außenteilen (5) und andererseits über Schwenkachsen (10) mit dem Maschinengestell (1) gelenkig verbunden. Dadurch, daß die Schwenkachsen (10) für die Koppelstangen (9) ausserhalb und tiefer als die Schwenkachsen (2) für die Innenteile (3) liegen, ist die Längenerstreckung der Ausleger (4) in der Arbeitsstellung größer als in der Transportstellung. Das bedeutet, daß bei vorgegebener Arbeitsbreite die Transporthöhe der Maschine geringer ist, als wenn die Ausleger eine festgelegte Länge hätten.

Die Erfindung kann sinngemäß auch bei anderen, gezogenen oder dreipunktgetragenen Landmaschinen Verwendung finden, bei denen die Arbeitswerkzeuge zum Transport nach oben verschwenkt werden.

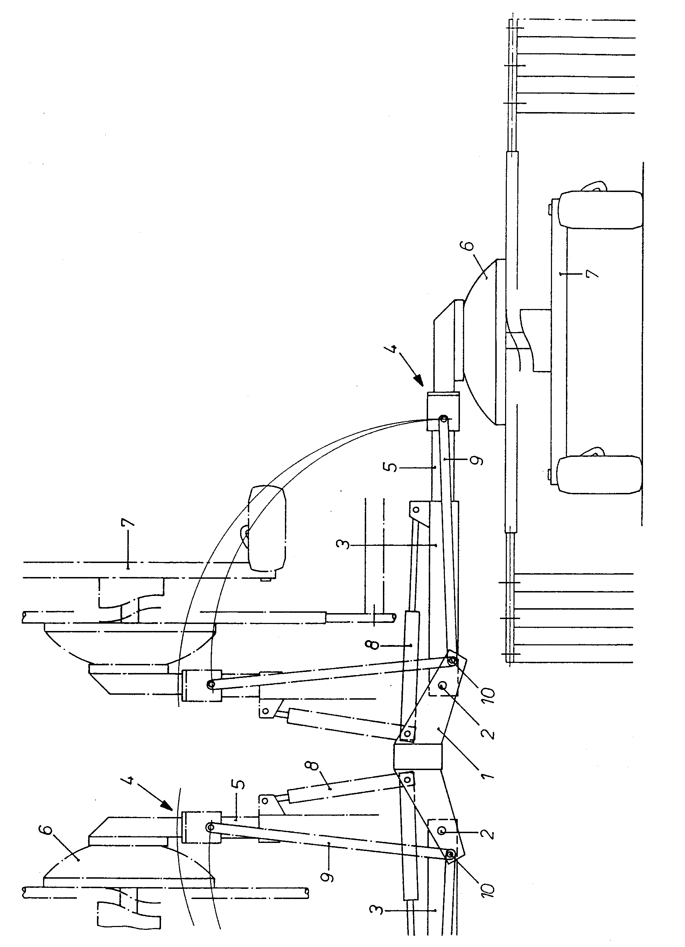

## Patentansprüche

1. Kreiselheumaschinen mit an Längen-veränderlichen, aus teleskopartik gegeneinander längsverschiebbaren aber drehfest miteinander verbundenen Teilen (3, 5) bestehenden Auslegern (4) gelagerten Arbeitskreiseln (6), die zum Transport um in Fahrtrichtung liegende Schwenkachsen (2) hochklappbar sind, dadurch gekennzeichnet, daß bei Verschwenkung um etwa 90 ° nach oben der Außenteil (5) der Ausleger (4) mit einem einerseits am Maschinengestell (1) gelagerten Verstellmittel (8 oder 9) gelenkig verbunden und über dieses (8 oder 9) beim Verschwenken in die Transportstellung zwangweise in eine verkürzte Längserstreckung des Auslegers (4) verschiebbar ist.

2. Kreiselheumaschinen nach Anspruch 1, dadurch gekennzeichnet, daß der Innenteil (3) der Ausleger (4) an einer in Fahrtrichtung liegenden Schwenkachse (2) am Maschinengestell (1) gelagert ist und der Außenteil (5) gelenkig mit einer Koppelstange (9) verbunden ist, die ihrerseits gelenkig mit dem Maschinengestell (1) gekoppelt ist, wobei die innere Schwenkachse (10) der Koppelstange (9) außerhalb und/oder tiefer als die Schwenkachse (2) für den Innenteil (3) liegt.

3. Kreiselheumaschinen nach Anspruch 1 oder 2, dadurch gekennzeichnet, daß das Verstellmittel (8, 9) zur Längenveränderung der Ausleger (4) auch zur Veränderung der Arbeitsbreite der Maschine herangezogen werden kann.

## Claims

1. Rotary hay-making machines comprising working rotors (6) mounted on cantilever arms which are variable in length and which comprise members (3, 5) which are telescopically longitudinally displaceable relative to each other but which are non-rotatably connected to each other, which working rotors can be pivoted upwardly for transportation purposes about pivot axes (2) which are disposed in the direction of travel, characterised in that with a pivotal movement through about 90° upwardly the outer member (5) of the cantilever arms (4) is hingedly connected to a displacement means (8 or 9) mounted on the machine frame structure (1) on the one hand and is positively displaceable into a condition of shortened longitudinal extent of the cantilever arm (4) by way of said displacement means (8 or 9) upon pivotal movement into the transportation position.

2. Rotary hay-making machines according to claim 1 characterised in that the inner member (3) of the cantilever arms (4) is mounted on the machine frame structure (1) at a pivot axis (2) which is disposed in the direction of travel and the outer member (5) is hingedly connected to a coupling bar (9) which in turn is hingedly coupled to the machine frame structure (1), wherein the inner pivot axis (10) of the coupling bar (9) lies outside and/or lower than the pivot axis (2) for the inner member (3).

3. Rotary hay-making machines according to claim 1 or claim 2 characterised in that the displacement means (8, 9) for varying the length of the cantilever arms (4) can also be used for varying the working width of the machine.

## Revendications

1. Machine de fenaison comprenant des rotors de travail (6) montés sur des bras (4) de longueur modifiable constitués par des parties (3, 5) reliées l'une à l'autre de façon que leur longueur puisse être modifiée télescopiquement l'une par rapport à l'autre mais qui sont fixes en rotation, rotors qui peuvent être rabattus vers le haut autour d'axes de pivotement (2) orientés dans la direction de la marche en vue de leur transport, caractérisée en ce que pour le pivotement vers le haut sur environ 90°, la partie externe (5) des bras (4) est reliée de façon articulée à un moyen de réglage (8 ou 9) monté sur un côté sur le châssis (1) de la machine et peut être déplacée obligatoirement par ce moyen (8 ou 9) pour déterminer une dimension longitudinale plus courte du bras (4) dans la position de transport.

2. Machine de fenaison selon la revendication 1, caractérisée en ce que la partie interne (3) des bras (4) est montée sur un axe de pivotement (2) orienté en direction de la marche sur le châssis (1) de la machine et la partie externe (5) est reliée de façon articulée à une tige d'accouplement (9) qui est accouplée de son côté de façon articulée au châssis (1) de la machine, l'axe de pivotement interne (10) de la tige d'accouplement (9) étant situé à l'extérieur et/ou plus bas que l'axe de pivotement (2) de la partie interne (3).

3. Machine de fenaison selon la revendication 1 ou 2, caractérisée en ce que le moyen de réglage (8, 9) destiné à la modification en longueur des bras (4) peut être également utilisé pour modifier la largeur de travail de la machine.
